(19) 〔European Patent Office logo〕 Europäisches Patentamt / European Patent Office / Office européen des brevets

(11) **EP 4 788 017 A1**

(12) # EUROPEAN PATENT APPLICATION
published in accordance with Art. 153(4) EPC

(43) Date of publication:
**05.08.2026 Bulletin 2026/32**

(21) Application number: **24872890.9**

(22) Date of filing: **25.09.2024**

(51) International Patent Classification (IPC):
**H04W 72/23** *(2023.01)*    **H04L 5/00** *(2006.01)*
**H04B 7/06** *(2006.01)*    **H04W 72/1268** *(2023.01)*
**H04L 1/1812** *(2023.01)*    **H04W 24/08** *(2009.01)*

(52) Cooperative Patent Classification (CPC):
**H04B 7/06; H04L 1/1812; H04L 5/00; H04W 24/08;
H04W 72/1268; H04W 72/23**

(86) International application number:
**PCT/KR2024/014461**

(87) International publication number:
**WO 2025/071182 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.09.2023 US 202363540356 P**

(71) Applicant: **LG ELECTRONICS INC.**
**Yeongdeungpo-gu
Seoul 07336 (KR)**

(72) Inventors:
- **CHOI, Seunghwan**
  **Seoul 06772 (KR)**
- **YANG, Suckchel**
  **Seoul 06772 (KR)**
- **KIM, Seonwook**
  **Seoul 06772 (KR)**

(74) Representative: **Jung, Minkyu**
**Wuesthoff & Wuesthoff
Patentanwälte und Rechtsanwalt PartG mbB
Schweigerstraße 2
81541 München (DE)**

(54) **METHOD AND APPARATUS FOR TRANSMITTING AND RECEIVING SIGNAL IN WIRELESS COMMUNICATION SYSTEM**

(57)    A method and an apparatus for transmitting and receiving a signal in a wireless communication system, which are disclosed in the present specification, transmit and receive a CSI report through a PUSCH. The PUSCH is positioned after a first processing time from the last symbol of the received PDCCH, and is positioned after a second processing time from the last symbol of an aperiodic CSI-RS resource. Values added to the CSI calculation delay requirements of the first processing time and the second processing time are set to be the same when the smallest values from among SCSs of the PDCCH, a CSI-RS, and the PUSCH are 3, 5, and 6.

【Fig. 4】

EP 4 788 017 A1

**Description**

**TECHNICAL FIELD**

The present disclosure relates to a method and apparatus for use in a wireless communication system.

**BACKGROUND**

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

**DISCLOSURE**

**TECHNICAL PROBLEM**

An object of the present disclosure is to provide a method and apparatus for efficiently transmitting and receiving a reference signal (RS) and a measurement report in a wireless communication system.

It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

The present disclosure provides a method and apparatus for transmitting and receiving a signal in a wireless communication system.

In an aspect of the present disclosure, a method for transmitting and receiving a signal by a user equipment (UE) in a wireless communication system is provided, including receiving a first physical downlink control channel (PDCCH) including downlink control information (DCI) for scheduling a first physical uplink shared channel (PUSCH), receiving a channel state information-reference signal (CSI-RS) in an aperiodic CSI-RS resource, and transmitting a CSI report through the first PUSCH, based on a measurement result of the CSI-RS.

In another aspect of the present disclosure, a method for transmitting and receiving a signal by a base station (BS) in a wireless communication system is provided, including transmitting a first PDCCH including DCI for scheduling a first PUSCH, transmitting a CSI-RS in an aperiodic CSI-RS resource, and receiving a CSI report through the first PUSCH, based on a measurement result of the CSI-RS.

In another aspect of the present disclosure, an apparatus, a processor, and a storage medium that perform one of the methods for transmitting and receiving a signal are provided.

In the methods and the apparatus, based on the first PUSCH overlapping with one or more second PUSCHs and one or more physical uplink control channels (PUCCHs), the PUSCH may be located after a first processing time from a last symbol in which a first signal is received. The first signal may be a signal including a symbol located last among (i) the first PDCCH, (ii) all second PDCCHs including a DCI format scheduling the second PUSCHs, and (iii) all third PDCCHs scheduling a physical downlink shared channel (PDSCH) corresponding to hybrid automatic repeat and request acknowledgement (HARQ-ACK) information in the PUCCHs or providing a DCI format.

In the methods and the apparatus, based on a smallest value among subcarrier spacing (SCS) values of the first PDCCH, all the second PDCCHs, all the third PDCCHs, the first PUSCH, the second PUSCHs, the CSI-RS, and a CSI-RS associated with each of all the second PDCCHs being 5 or 6, a first value added to a value of a CSI calculation delay requirement related to the first processing time may be set to be equal to a value when the smallest value is 3.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

## ADVANTAGEOUS EFFECTS

According to one embodiment of the present disclosure, when signals are transmitted and received between communication devices, the signals may be transmitted and received more efficiently based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIG. 4 is a diagram illustrating methods for transmitting and receiving a signal according to the embodiments of the present disclosure.
FIGS. 5 to 8 illustrate devices according to an embodiment of the present disclosure.

## DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

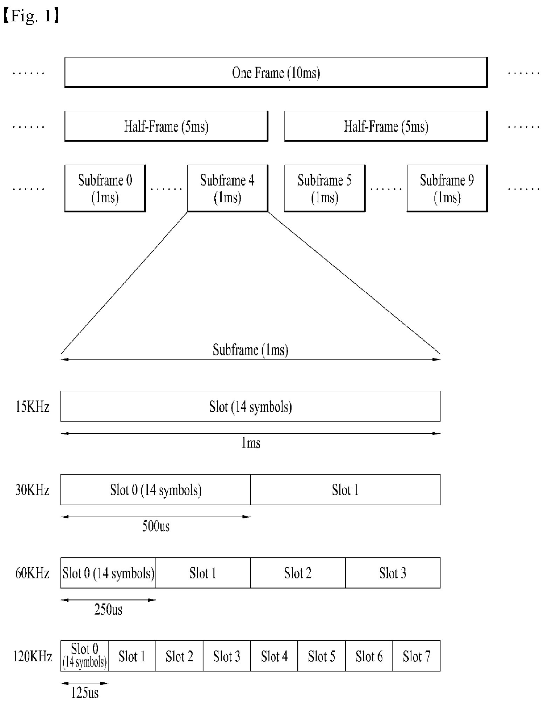

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: number of symbols in a slot<br>* $N^{frame,u}_{slot}$: number of slots in a frame<br>* $N^{frame,u}_{slot}$: number of slots in a subframe | | | |

Table 2 illustrates that the number of symbols per slot, the number of slots per frame, and the number of slots per subframe vary according to SCSs in an extended CP case.

[Table 2] [36]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

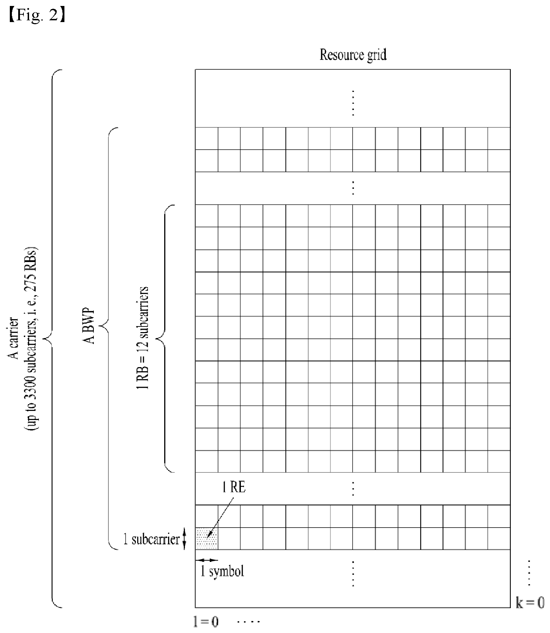

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace me {0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

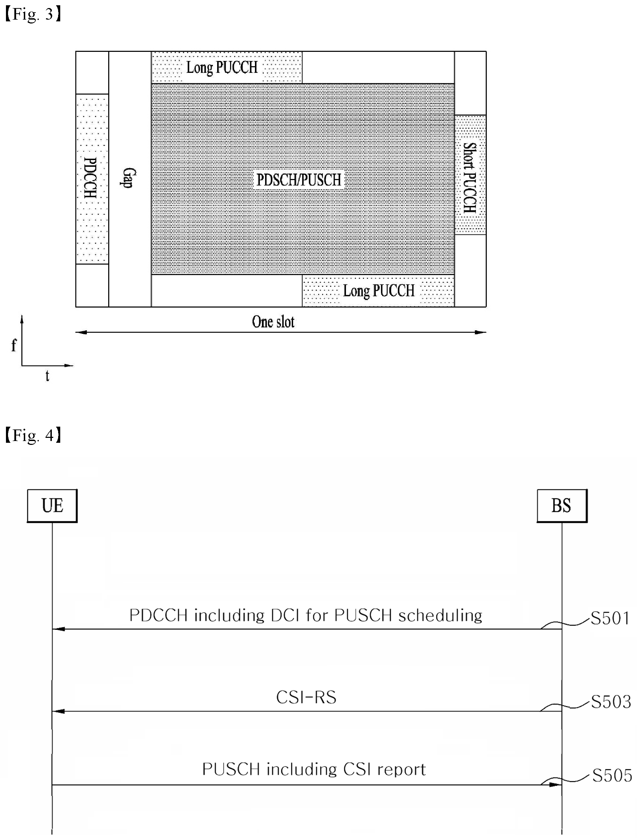

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### UL Physical Channels/Signals

#### (1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

#### (2) PUCCH

A PUCCH may carry UCI. The UCI includes the following information.

- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

### DL Physical Channel/Signal

#### (1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

(2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time-/frequency resource allocation information on a higher layer control message such as a random access response (RAR) transmitted over a PDSCH; transmit power control commands; and information on activation/deactivation of SPS/CS. Various DCI formats may be provided depending on information in DCI.

**1. Additional time for CSI delay**

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system

An SCS of 120, 480, or 960 kHz may be used for NR operation in bands above 52.6 GHz. For the newly introduced 480 and 960 kHz SCS, the length of an OFDM symbol becomes shorter than that of 120 kHz SCS (e.g., 1/4 times for 480 kHz and 1/8 times for 960 kHz). Due to the shortened symbol and slot lengths, there may be various changes in timelines such as a PDCCH/PDSCH processing time and a PDSCH/PUSCH preparation time.

A UE may transmit an (aperiodic) CSI report on a PUSCH. In this case, the CSI report may be triggered by DCI. The legacy 3GPP standard documents define a minimum time required from reception of a PDCCH carrying DCI to transmission of a UL channel (e.g., PUSCH) carrying CSI. When this minimum time is satisfied, the UE should transmit a valid CSI report. The minimum time is defined as follows.

In the following two cases, when a CSI request field in DCI triggers CSI report(s) on a PUSCH, the UE should provide a valid CSI report for an n-th triggered report.

- If the first UL symbol to carry the CSI report(s), including the effect of a timing advance, starts no earlier than at symbol $Z_{ref}$, and
- If the first UL symbol to carry the n-th CSI report, including the effect of a timing advance, starts no earlier than at symbol $Z'_{ref}(n)$.

When an aperiodic CSI-RS is used for channel measurement for the n-th triggered CSI report, $Z_{ref}$ is defined as a UL symbol in which a CP starts after $T'_{proc,CSI}=(Z)(2048+144) \cdot \kappa 2^{-\mu} \cdot T_c + T_{switch}$ from the end of the last symbol of a PDCCH triggering the CSI report, and $Z'_{ref}(n)$ is defined as a UL symbol in which a CP starts after $T'_{proc,CSI}=(Z')(2048+144) \cdot \kappa 2^{-\mu} \cdot T_c$ from the end of the last symbol among the following signals.

- Aperiodic CSI-RS resource for channel measurement.
- Aperiodic CSI-interference measurement (IM) used for interference measurement.
- Aperiodic non-zero power (NZP) CSI-RS for interference measurement.

When a UL switching gap is triggered, for a UE configured with a higher-layer parameter uplinkTxSwitchingOption for UL carrier aggregation (CA) set to 'dualUL', $T_{switch}$ is equal to a UL switching period. In other cases, $T_{switch} = 0$. $T_{switch}$ is applied only when $Z_1$ of Table 4 is used.

Z and Z' are CSI computation delay requirements, defined as $Z=max_{m=0,...,M-1}(Z(m))$ and $Z'=max_{m=0,...,M-1}(Z'(m))$, where M is the number of CSI report(s) updated based on the CSI processing criteria described in Section 5.2.1.6 of 3GPP TS 38.214 and the CPU occupancy of the UE. $(Z(m), Z'(m))$ is selected from either $(Z_1, Z'_1)$ of Table 4 (CSI computation delay requirement 1) or one of $(Z_1, Z'_1)$, $(Z_2, Z'_2)$, and $(Z_3, Z'_3)$ of Table 5 (CSI computation delay requirement 2), depending on a condition satisfied by an m-th updated CSI report. A specific condition for selecting certain Z and Z' values are based on Section 5.4 of 3GPP TS 38.214.

[Table 4]

| μ | $Z_1$ [symbols] | |
| --- | --- | --- |
| | $Z_1$ | $Z'_1$ |
| 0 | 10 | 8 |
| 1 | 13 | 11 |
| 2 | 25 | 21 |
| 3 | 43 | 36 |

[Table 5]

| μ | $Z_1$ [symbols] | | $Z_2$ [symbols] | | $Z_3$ [symbols] | |
| --- | --- | --- | --- | --- | --- | --- |
| | $Z_1$ | $Z'_1$ | $Z_2$ | $Z'_2$ | $Z_3$ | $Z'_3$ |
| 0 | 22 | 16 | 40 | 37 | 22 | $X_0$ |
| 1 | 33 | 30 | 72 | 69 | 33 | $X_1$ |
| 2 | 44 | 42 | 141 | 140 | $\min(44, X_2 + KB_1)$ | $X_2$ |
| 3 | 97 | 85 | 152 | 140 | $\min(97, X_3 + KB_2)$ | $X_3$ |
| 5 | 388 | 340 | 608 | 560 | min(388, X5+ KB3) | X5 |
| 6 | 776 | 680 | 1216 | 1120 | min(776, X6+ KB4) | X6 |

$$Tc = 1/(480000*4096)$$

and $\kappa=64$.

$\mu$ is a minimum value among $\mu_{PDCCH}$, $\mu_{CSI-RS}$, and $\mu_{UL}$, where $\mu_{PDCCH}$ corresponds to the subcarrier spacing (SCS) of the PDCCH carrying the DCI, $\mu_{CSI-RS}$ corresponds to the SCS of the PUSCH carrying the CSI report, and $\mu_{UL}$ corresponds to the SCS of the aperiodic CSI-RS triggered by the DCI.

When different types of UCIs are configured/indicated to be transmitted on a plurality of overlapping PUCCHs and/or PUSCHs, a condition (in terms of timeline) for multiplexing the UCIs is specified as follows. In particular, regarding a CSI report, a condition for a minimum time required between a PDCCH (e.g., triggering the CSI report) and a UL channel/signal (e.g., PUSCH) is specified as follows.

When the UE transmits a plurality of overlapping PUCCHs in one slot or a plurality of overlapping PUCCH(s) and PUSCH(s) in one slot, the UE is configured to multiplex UCIs of different UCI types or different priority indices within one PUCCH, and at least one of the plurality of overlapping PUCCHs or PUSCHs is a response to a DCI format detected by the UE, the UE multiplexes all the UCIs of different UCI types or different priority indices if the following condition is satisfied. When one of the PUCCH transmissions or PUSCH transmissions is a response to the DCI format detected by the UE, the UE expects that the first symbol $S_0$ of the earliest PUCCH or PUSCH in the group of overlapping PUCCHs and PUSCHs within the slot satisfies the following timeline condition.

Timeline Condition:

When there is aperiodic CSI multiplexed in a PUSCH within the group of overlapping PUCCHs and PUSCHs, $S_0$ is not located before a symbol in which a CP starts after $T_{(proc,CSI)}^{mux}=\max((Z+d)\cdot(2048+144)\cdot\kappa 2^{-\mu}\cdot T_c+T_{switch}, d_{2,2})$ from the end of the last symbol among the following first signals.

First Signals:

- Any PDCCH with the DCI format scheduling an overlapping PUSCH.
- Any PDCCH scheduling a PDSCH, or providing a DCI format, with corresponding HARQ-ACK information in an overlapping PUCCH in the slot.

$\mu$ corresponds to the smallest SCS configuration among the SCS configuration of the PDCCHs, the smallest SCS configuration for the group of overlapping PUSCHs, and the smallest SCS configuration of the CSI-RS associated with the DCI format scheduling the PUSCH carrying the aperiodic CSI report.

$$d = 2 \text{ for } \mu=0 \text{ and } 1, d = 3 \text{ for } \mu=2, \text{ and } d = 4 \text{ for } \mu=3.$$

$Z$, $\kappa$, $T_c$, and $T_{switch}$ are as defined previously.

When scheduling DCI triggers BWP switching, $d_{2,2}$ is equal to a switching time. Otherwise, $d_{2,2}=0$.

T_proc,CSI^mux may be understood as a minimum interval from the last symbol of the PDCCH to the first symbol of the UL signal (e.g., PUSCH) (carrying the corresponding CSI report).

This operation may also be supported for $\mu=5$ and/or $\mu=6$ in the FR2-2 band, and for this purpose, the T_(proc,CSI)^mux formula needs to be defined for $\mu=5$ and 6 as well. In the present disclosure, a d value for $\mu=5$ and 6 is proposed through one (or a combination of two or more) of the following methods.

Method 1-1: The d value for $\mu=5$ is defined as 4 times the d value when $\mu=3$, and the d value for $\mu=6$ is defined as 8 times the d value when $\mu=3$. That is, d=16 for $\mu=5$, and d=32 for $\mu=6$. This method may maintain the complexity of the UE because when the UE processes a signal configured with a 480/960-kHz SCS or when the signal is transmitted, it may have a processing/preparation timeline similar to a 120-kHz signal.

Method 1-2: The d value for $\mu=5$ and/or $\mu=6$ may be (equally) defined as a value obtained by scaling the d value for $\mu=3$ by 4 times or 8 times. That is, d=16 for $\mu=5$ and 6, or d=32 for $\mu=5$ and 6. This method may have advantages in terms of timeline as in Method 1-1, and also, by fixing the d value for $\mu=5$ and 6 to one value, an additional time actually occurring due to "d" may vary for each of $\mu=5$ and $\mu=6$.

Method 1-3: The d value for $\mu=5$ and/or $\mu=6$ may be defined as the same value as the d value for $\mu=3$ (i.e., d=4). That is, d=4 for $\mu=5$ and 6. This method may be useful when Z for $\mu=5$ and 6 is defined/configured to be sufficiently large. That is, since no separate d value is defined and the d values for $\mu=3$, 5, and 6 are defined identically, the impact on the specification is minimized, and the additional time actually occurring due to "d" may be applied differently for each $\mu$.

Method 1-4: The d value for $\mu=5$ and/or $\mu=5$ may be defined as 0. That is, d=0 for $\mu=5$ and 6. This method may be useful when Z for $\mu=5$ and 6 is defined/configured to be sufficiently large. That is, since the Z value for $\mu=5$ and 6 is defined/configured to be sufficiently large, advantages in terms of resource efficiency and latency may be obtained by minimizing the additional time actually occurring due to "d".

Method 1-5: The d value for $\mu=5$ may be defined as a value (i.e., d=6) obtained by adding 2 to the d value for $\mu=3$, and the d value for $\mu=6$ may be defined as a value (i.e., d=7 or d=8) obtained by adding 3 (or 4) to the d value for $\mu=3$. That is, d=6 for $\mu=5$, and d=7 for $\mu=6$ (or d=8 for $\mu=6$). This method is based on the fact that the increment of the d value for $\mu=2$ relative to conventional $\mu=0$ and 1, or the increment of the d value for $\mu=3$ relative to $\mu=2$, is 1 symbol. This method may also be useful when Z for $\mu=5$ and 6 is defined/configured to be sufficiently large. That is, since the Z value for $\mu=5$ and 6 is defined/configured to be sufficiently large, advantages in terms of resource efficiency and latency may be obtained by minimizing the additional time actually occurring due to "d".

Further, regarding a CSI report, a condition for a minimum time required between a reception time of a signal/channel (e.g., CSI-RS) used for measurement for the CSI report and a UL channel/signal (e.g., PUSCH) carrying the CSI report (calculated from the reception time) is as follows.

When one or more aperiodic CSI reports multiplexed in a PUSCH within a group of overlapping PUCCHs and PUSCHs exist, and $S_0$ is located before the next UL symbol Z'_ref^mux in which a CP starts after Z'_(proc,CSI)^mux= $(Z'+d)(2048+144)\cdot\kappa 2^{-\mu}\cdot T_c$ from the end of the last symbol among the symbols of the following second signals, the UE is not required to provide a CSI report update for an n-th triggered CSI report.

Symbols of Second Signals:

- The last symbol of an aperiodic CSI-RS resource for channel measurement, and
- The last symbol of an aperiodic CSI-IM used for interference measurement, and
- The last symbol of an aperiodic NZP CSI-RS for interference measurement, when an aperiodic CSI-RS is used for channel measurement for the n-th triggered CSI report.

$\mu$ corresponds to the smallest SCS configuration among the SCS configurations of the PDCCHs scheduling the PUSCHs, the smallest SCS configuration of the aperiodic CSI-RSs associated with DCI formats provided by the PDCCHs triggering the aperiodic CSI reports, and the smallest SCS configuration of the overlapping PUCCHs and PUSCHs.

d=2 for $\mu=0$ and 1, d=3 for $\mu=3$, and d=4 for $\mu=3$.

$Z'$, $\kappa$, and $T_c$ are as defined previously.

Z'_(proc,CSI)^mux may be understood as a minimum interval from the last symbol of a signal/channel for measurement (e.g., CSI-RS) to the first symbol of a UL signal (e.g., PUSCH) (carrying a corresponding CSI report).

This operation may also be supported for $\mu=5$ and/or $\mu=6$ in the FR2-2 band, and for this purpose, the $Z'\_(proc,CSI)^{mux}$ formula needs to be defined for $\mu=5$ and 6 as well. In the present disclosure, a d value for $\mu=5$ and 6 is proposed through one (or a combination of two or more) of the following methods.

Method 2-1: The d value for $\mu=5$ is defined as 4 times the d value when $\mu=3$, and the d value for $\mu=6$ is defined as 8 times the d value when $\mu=3$. That is, d=16 for $\mu=5$, and d=32 for $\mu=6$. This method may maintain the complexity of the UE because when the UE processes a signal configured with a 480/960-kHz SCS or when the signal is transmitted, the UE may have a processing/preparation timeline similar to a 120-kHz signal.

Method 2-2: The d value for $\mu=5$ and/or $\mu=6$ may be (equally) defined as a value obtained by scaling the d value for $\mu=3$ by 4 times or 8 times. That is, d=16 for $\mu=5$ and 6, or d=32 for $\mu=5$ and 6. This method may have advantages in terms of timeline as in Method 2-1, and also, by fixing the d value for $\mu=5$ and 6 to one value, the additional time actually occurring due to "d" may vary for each of $\mu=5$ and 6.

Method 2-3: The d value for $\mu=5$ and/or $\mu=6$ may be defined as the same value (i.e., d=4) as the d value for $\mu=3$. That is, d=4 for $\mu=5$ and 6. This method may be useful when Z for $\mu=5$ and 6 is defined/configured to be sufficiently large. That is, since no separate d value is defined and the d values for $\mu=3$, 5, and 6 are defined identically, the impact on the specification is minimized, and the additional time actually occurring due to "d" may be applied differently for each $\mu$.

Method 2-4: The d value for $\mu=5$ and/or $\mu=6$ may be defined as 0. That is, d=0 for $\mu=5$ and 6. This method may be useful when Z for $\mu=5$ and 6 is defined/configured to be sufficiently large. That is, since the Z value for $\mu=5$ and 6 is defined/configured to be sufficiently large, advantages in terms of resource efficiency and latency may be obtained by minimizing the additional time actually occurring due to "d".

Method 2-5: The d value for $\mu=5$ may be defined as a value (i.e., d=6) obtained by adding 2 to the d value for $\mu=3$, and the d value for $\mu=6$ may be defined as a value (i.e., d=7 or d=8) obtained by adding 3 (or 4) to the d value for $\mu=3$. That is, d=6 for $\mu=5$, and d=7 for $\mu=6$ (or d=8 for $\mu=5$). This method is based on the fact that the increment of the d value for $\mu=2$ relative to conventional $\mu=0$ and 1, or the increment of the d value for $\mu=3$ relative to $\mu=2$, is 1 symbol. This method may also be useful when Z for $\mu=5$ and 6 is defined/configured to be sufficiently large. That is, since the Z value for $\mu=5$ and 6 is defined/configured to be sufficiently large, advantages in terms of resource efficiency and latency may be obtained by minimizing the additional time actually occurring due to "d".

Although the methods proposed in the present disclosure are described for $\mu=5$ and/or $\mu=6$, they are not limited thereto. The proposed methods may be identically applied to a numerology or SCS (i.e., 960 kHz) larger than $\mu=6$. For example, for x > 6, the proposed methods may be extended and applied in the following manners.

- The d value for $\mu=x$ is defined as 0.
- The d value for $\mu=x$ is defined as 4.
- The d value for $\mu=x$ is defined as y times the d value for $\mu=3$. In this case, y is defined as $2^{(x-3)}$.

The present disclosure is not limited to transmission and reception of UL and/or DL signals. For example, the present disclosure may also be used for direct communication between UEs. In addition, the term "BS" in the present disclosure may include a relay node as well as a base station. For example, the operations of the BS described in this document may be performed by base stations, but the operations may also be performed by relay nodes.

It is obvious that each of the examples of the proposed methods may also be included as one implementation method of the present disclosure, and thus each example may be regarded as a kind of proposed method. Although the above-described proposed methods may be implemented independently, some of the proposed methods may be combined (or merged) and implemented. In addition, it may be regulated that information on whether the proposed methods are applied (or information on rules related to the proposed methods) is transmitted from the BS to the UE or from the transmitting UE to the receiving UE in a predefined signal (e.g., physical layer signaling or higher layer signaling).

Implementation Example

FIG. 4 is a flowchart illustrating a method for transmitting and receiving a signal.

Referring to FIG. 4, an embodiment performed by a UE may include receiving DCI for scheduling a PUSCH (S501), receiving a CSI-RS in an aperiodic CSI-RS resource (S503), and transmitting a CSI report through the PUSCH based on a measurement result of the CSI-RS (S505).

Referring to FIG. 4, an embodiment performed by a BS may include transmitting DCI for scheduling a PUSCH (S501), transmitting a CSI-RS in an aperiodic CSI-RS resource (S503), and receiving a CSI report through the PUSCH based on a measurement result of the CSI-RS (S505).

In addition to the operations of FIG. 4, one or more of the operations described in section 1 may be further performed.

Referring to section 1, the first symbol $S_0$ of the earliest PUCCH or PUSCH in a group of overlapping PUCCHs and PUSCHs in a slot is not transmitted earlier than the first symbol after T_(proc,CSI)^mux (a first processing time) from the last symbol in which the PDCCH is received, and is not transmitted earlier than Z'_ref^mux, which is the first symbol after Z'_(proc,CSI)^mux (a second processing time) from the last symbol among the following three symbols.

- The last symbol of an aperiodic CSI-RS resource for channel measurement.
- The last symbol of an aperiodic CSI-IM used for interference measurement.
- The last symbol of an aperiodic NZP CSI-RS for interference measurement or all triggered sub-configurations, when an aperiodic CSI-RS is used for channel measurement for an n-th triggered CSI report.

Referring to the formulas related to the first processing time and the second processing time, Z+d is used for determining the first processing time, and Z'+d is used for determining the second processing time. Z and Z' are the above-described CSI computation delay requirements, and depending on a specific condition, Z and Z' are selected as a pair from the values of Table 4 and Table 5.

A d value added to Z is determined based on a minimum value among SCS configurations of PDCCHs, a smallest SCS configuration for a group of overlapping PUSCHs, and a smallest SCS configuration of a CSI-RS associated with a DCI format scheduling a PUSCH including an aperiodic CSI report.

A d value added to Z' is determined based on a minimum value among SCS configurations of PDCCHs scheduling PUSCHs, a smallest SCS configuration of aperiodic CSI-RSs associated with DCI formats provided by PDCCHs triggering aperiodic CSI reports, and a smallest SCS configuration of overlapping PUCCHs and PUSCHs.

Conventionally, each d value is defined for only up to the case where the smallest SCS value is 3. In the present embodiment, referring to Methods 1-3 and 2-3 for example, for cases where the smallest SCS value is 5 or 6, both a d value (a first value) for the first processing time and a d value (a second value) for the second processing time may be set to the same as when the smallest SCS value is 3 (i.e., set to 4).

Although only the first and second values based on Methods 1-3 and 2-3 are exemplified, any one of Methods 1-1 to 1-5 and any one of Methods 2-1 to 2-5 may be arbitrarily combined.

Additionally, based on the smallest SCS value being greater than 6, each d value related to the first processing time and/or the second processing time may be (independently) determined by one of the methods for when $\mu=x$.

In addition to the operations described in relation to FIG. 4, one or more of the operations described through FIGS. 1 to 3 and/or the operations described in section 1 may be combined and further performed.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

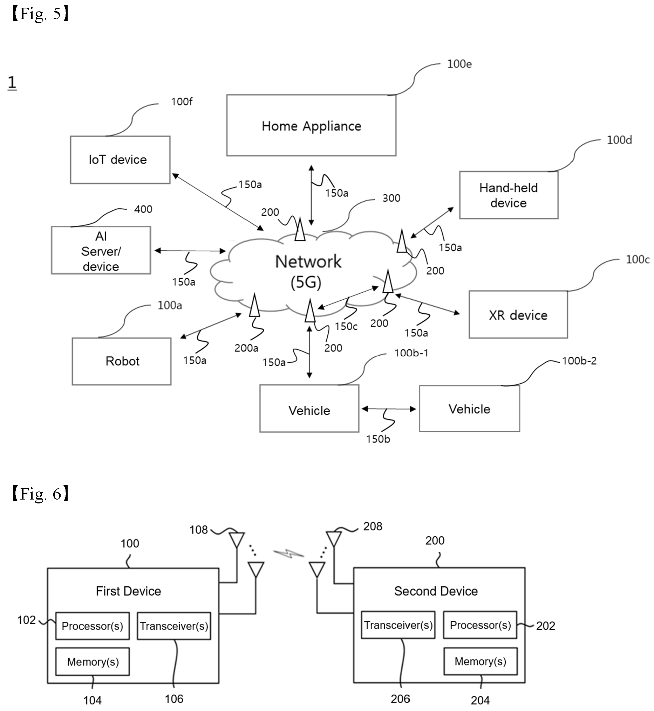

FIG. 5 illustrates a communication system 1 applied to the present disclosure.

Referring to FIG. 5, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

FIG. 6 illustrates wireless devices applicable to the present disclosure.

Referring to FIG. 6, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 5.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

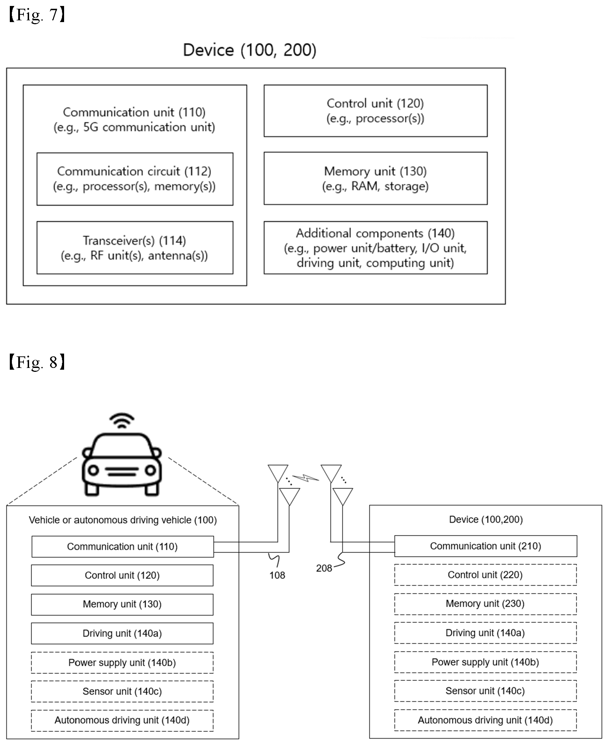

FIG. 7 illustrates another example of a wireless device applied to the present disclosure. The wireless device may be implemented in various forms according to a use case/service (refer to FIG. 5).

Referring to FIG. 7, wireless devices 100 and 200 may correspond to the wireless devices 100 and 200 of FIG. 6 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 6. For example, the transceiver(s) 114 may include the one or more transceivers 106 and 206 and/or the one or more antennas 108 and 208 of FIG. 6. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 5), the vehicles (100b-1 and 100b-2 of FIG. 5), the XR device (100c of FIG. 5), the hand-held device (100d of FIG. 5), the home appliance (100e of FIG. 5), the IoT device (100f of FIG. 5), a digital broadcasting terminal, a hologram device, a public safety device, an MTC device, a medical device, a FinTech device (or a finance device), a security device, a climate/environment device, the AI server/device (400 of FIG. 5), the BSs (200 of FIG. 5), a network node, or the like. The wireless device may be mobile or fixed according to a use case/service.

In FIG. 7, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 8 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 8, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 7, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

As described above, the present disclosure is applicable to various wireless communication systems.

**Claims**

1. A method for transmitting and receiving a signal by a user equipment (UE) in a wireless communication system, the method comprising:

    receiving a first physical downlink control channel (PDCCH) including downlink control information (DCI) for scheduling a first physical uplink shared channel (PUSCH);
    receiving a channel state information-reference signal (CSI-RS) in an aperiodic CSI-RS resource; and
    transmitting a CSI report through the first PUSCH, based on a measurement result of the CSI-RS,
    wherein based on the first PUSCH overlapping with one or more second PUSCHs and one or more physical uplink control channels (PUCCHs), the PUSCH is located after a first processing time from a last symbol in which a first signal is received,
    wherein the first signal is a signal including a symbol located last among (i) the first PDCCH, (ii) all second PDCCHs including a DCI format scheduling the second PUSCHs, and (iii) all third PDCCHs scheduling a physical downlink shared channel (PDSCH) corresponding to hybrid automatic repeat and request acknowledgement (HARQ-ACK) information in the PUCCHs or providing a DCI format, and
    wherein based on a smallest value among subcarrier spacing (SCS) values of the first PDCCH, all the second PDCCHs, all the third PDCCHs, the first PUSCH, the second PUSCHs, the CSI-RS, and a CSI-RS associated with each of all the second PDCCHs being 5 or 6, a first value added to a value of a CSI calculation delay requirement related to the first processing time is set to be equal to a value when the smallest value is 3.

2. The method of claim 1, wherein based on the PUSCH overlapping with the one or more PUSCHs or the one or more PUCCHs, the PUSCH is located after a second processing time from a last symbol of a second signal,

    wherein the second signal is a signal including a symbol located last among (i) the CSI-RS, (ii) an aperiodic CSI-RS for channel measurement, (iii) an aperiodic channel state information-interference measurement (CSI-IM) used for interference measurement, and (iv) an aperiodic non-zero power (NZP) CSI-RS for interference measurement, and
    wherein based on a smallest value among SCS values of the first PDCCH, all the second PDCCHs, the first PUSCH, the second PUSCHs, the PUCCH, the CSI-RS, and the CSI-RS associated with each of all the second PDCCHs being 5 or 6, a second value added to a value of a CSI calculation delay requirement related to the second processing time is set to be equal to a value when the smallest value is 3.

3. The method of claim 1, wherein the first value is 4.

4. The method of claim 2, wherein the second value is 4.

5. The method of claim 1, wherein based on the smallest value being greater than 6, the first value is set to 0.

6. The method of claim 1, wherein based on the smallest value being greater than 6, the first value is set to be equal to the value when the smallest value is 3.

7. The method of claim 1, wherein based on the smallest value being greater than 6, the first value is set to a specific multiple of the value when the smallest value is 3, and
   wherein the specific multiple is determined based on the smallest value.

8. A user equipment (UE) for transmitting and receiving a signal in a wireless communication system, the UE comprising:

   at least one transceiver;
   at least one processor; and
   at least one memory operably connected to the at least one processor and storing instructions that, when executed, cause the at least one processor to perform specific operations,
   wherein the specific operations include:

   receiving a first physical downlink control channel (PDCCH) including downlink control information (DCI) for scheduling a first physical uplink shared channel (PUSCH);
   receiving a channel state information-reference signal (CSI-RS) in an aperiodic CSI-RS resource; and
   transmitting a CSI report through the first PUSCH, based on a measurement result of the CSI-RS,
   wherein based on the first PUSCH overlapping with one or more second PUSCHs and one or more physical uplink control channels (PUCCHs), the PUSCH is located after a first processing time from a last symbol in which a first signal is received,
   wherein the first signal is a signal including a symbol located last among (i) the first PDCCH, (ii) all second PDCCHs including a DCI format scheduling the second PUSCHs, and (iii) all third PDCCHs scheduling a physical downlink shared channel (PDSCH) corresponding to hybrid automatic repeat and request acknowledgement (HARQ-ACK) information in the PUCCHs or providing a DCI format, and
   wherein based on a smallest value among subcarrier spacing (SCS) values of the first PDCCH, all the second PDCCHs, all the third PDCCHs, the first PUSCH, the second PUSCHs, the CSI-RS, and a CSI-RS associated with each of all the second PDCCHs being 5 or 6, a first value added to a value of a CSI calculation delay requirement related to the first processing time is set to be equal to a value when the smallest value is 3.

9. An apparatus for a user equipment (UE), comprising:

   at least one processor; and
   at least one computer memory operably connected to the at least one processor and, when executed, causing the at least one processor to perform operations,
   wherein the operations include:

   receiving a first physical downlink control channel (PDCCH) including downlink control information (DCI) for scheduling a first physical uplink shared channel (PUSCH);
   receiving a channel state information-reference signal (CSI-RS) in an aperiodic CSI-RS resource; and
   transmitting a CSI report through the first PUSCH, based on a measurement result of the CSI-RS,
   wherein based on the first PUSCH overlapping with one or more second PUSCHs and one or more physical uplink control channels (PUCCHs), the PUSCH is located after a first processing time from a last symbol in which a first signal is received,
   wherein the first signal is a signal including a symbol located last among (i) the first PDCCH, (ii) all second PDCCHs including a DCI format scheduling the second PUSCHs, and (iii) all third PDCCHs scheduling a physical downlink shared channel (PDSCH) corresponding to hybrid automatic repeat and request acknowledgement (HARQ-ACK) information in the PUCCHs or providing a DCI format, and
   wherein based on a smallest value among subcarrier spacing (SCS) values of the first PDCCH, all the second PDCCHs, all the third PDCCHs, the first PUSCH, the second PUSCHs, the CSI-RS, and a CSI-RS associated with each of all the second PDCCHs being 5 or 6, a first value added to a value of a CSI calculation delay requirement related to the first processing time is set to be equal to a value when the smallest value is 3.

10. A non-transitory computer-readable storage medium including at least one computer program that causes at least one processor to perform operations,

wherein the operations include:

receiving a first physical downlink control channel (PDCCH) including downlink control information (DCI) for scheduling a first physical uplink shared channel (PUSCH);

receiving a channel state information-reference signal (CSI-RS) in an aperiodic CSI-RS resource; and transmitting a CSI report through the first PUSCH, based on a measurement result of the CSI-RS,

wherein based on the first PUSCH overlapping with one or more second PUSCHs and one or more physical uplink control channels (PUCCHs), the PUSCH is located after a first processing time from a last symbol in which a first signal is received,

wherein the first signal is a signal including a symbol located last among (i) the first PDCCH, (ii) all second PDCCHs including a DCI format scheduling the second PUSCHs, and (iii) all third PDCCHs scheduling a physical downlink shared channel (PDSCH) corresponding to hybrid automatic repeat and request acknowledgement (HARQ-ACK) information in the PUCCHs or providing a DCI format, and

wherein based on a smallest value among subcarrier spacing (SCS) values of the first PDCCH, all the second PDCCHs, all the third PDCCHs, the first PUSCH, the second PUSCHs, the CSI-RS, and a CSI-RS associated with each of all the second PDCCHs being 5 or 6, a first value added to a value of a CSI calculation delay requirement related to the first processing time is set to be equal to a value when the smallest value is 3.

11. A method for transmitting and receiving a signal by a base station (BS) in a wireless communication system, the method comprising:

transmitting a first physical downlink control channel (PDCCH) including downlink control information (DCI) for scheduling a first physical uplink shared channel (PUSCH);

transmitting a channel state information-reference signal (CSI-RS) in an aperiodic CSI-RS resource; and receiving a CSI report through the first PUSCH, based on a measurement result of the CSI-RS,

wherein based on the first PUSCH overlapping with one or more second PUSCHs and one or more physical uplink control channels (PUCCHs), the PUSCH is located after a first processing time from a last symbol in which a first signal is received,

wherein the first signal is a signal including a symbol located last among (i) the first PDCCH, (ii) all second PDCCHs including a DCI format scheduling the second PUSCHs, and (iii) all third PDCCHs scheduling a physical downlink shared channel (PDSCH) corresponding to hybrid automatic repeat and request acknowledgement (HARQ-ACK) information in the PUCCHs or providing a DCI format, and

wherein based on a smallest value among subcarrier spacing (SCS) values of the first PDCCH, all the second PDCCHs, all the third PDCCHs, the first PUSCH, the second PUSCHs, the CSI-RS, and a CSI-RS associated with each of all the second PDCCHs being 5 or 6, a first value added to a value of a CSI calculation delay requirement related to the first processing time is set to be equal to a value when the smallest value is 3.

12. A base station (BS) for transmitting and receiving a signal in a wireless communication system, the BS comprising:

at least one transceiver;

at least one processor; and

at least one memory operably connected to the at least one processor and storing instructions that, when executed, cause the at least one processor to perform specific operations,

wherein the specific operations include:

transmitting a first physical downlink control channel (PDCCH) including downlink control information (DCI) for scheduling a first physical uplink shared channel (PUSCH);

transmitting a channel state information-reference signal (CSI-RS) in an aperiodic CSI-RS resource; and receiving a CSI report through the first PUSCH, based on a measurement result of the CSI-RS,

wherein based on the first PUSCH overlapping with one or more second PUSCHs and one or more physical uplink control channels (PUCCHs), the PUSCH is located after a first processing time from a last symbol in which a first signal is received,

wherein the first signal is a signal including a symbol located last among (i) the first PDCCH, (ii) all second PDCCHs including a DCI format scheduling the second PUSCHs, and (iii) all third PDCCHs scheduling a physical downlink shared channel (PDSCH) corresponding to hybrid automatic repeat and request acknowledgement (HARQ-ACK) information in the PUCCHs or providing a DCI format, and

wherein based on a smallest value among subcarrier spacing (SCS) values of the first PDCCH, all the second PDCCHs, all the third PDCCHs, the first PUSCH, the second PUSCHs, the CSI-RS, and a CSI-RS associated with each of all the second PDCCHs being 5 or 6, a first value added to a value of a CSI calculation delay requirement related to the first processing time is set to be equal to a value when the smallest value is 3.

【Fig. 1】

【Fig. 2】

【Fig. 3】

【Fig. 4】

【Fig. 5】

【Fig. 6】

【Fig. 7】

Device (100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

【Fig. 8】

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100,200)

Communication unit (210)

Control unit (220)

Memory unit (230)

Driving unit (140a)

Power supply unit (140b)

Sensor unit (140c)

Autonomous driving unit (140d)

# EP 4 788 017 A1

## INTERNATIONAL SEARCH REPORT

| | International application No. |
|---|---|
| | **PCT/KR2024/014461** |

### A. CLASSIFICATION OF SUBJECT MATTER

**H04W 72/23**(2023.01)i; **H04L 5/00**(2006.01)i; **H04B 7/06**(2006.01)i; **H04W 72/1268**(2023.01)i; **H04L 1/1812**(2023.01)i; **H04W 24/08**(2009.01)i

According to International Patent Classification (IPC) or to both national classification and IPC

### B. FIELDS SEARCHED

Minimum documentation searched (classification system followed by classification symbols)

H04W 72/23(2023.01); H04B 7/06(2006.01); H04L 1/08(2006.01); H04L 1/18(2006.01); H04W 24/10(2009.01); H04W 72/12(2009.01); H04W 72/1268(2023.01); H04W 72/566(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DCI, PUSCH schedule, aperiodic CSI-RS, CSI report, overlap, PUCCH, PUSCH, processing time, subcarrier spacing, CSI computation delay requirement

### C. DOCUMENTS CONSIDERED TO BE RELEVANT

| Category* | Citation of document, with indication, where appropriate, of the relevant passages | Relevant to claim No. |
|---|---|---|
| A | US 2019-0053089 A1 (SAMSUNG ELECTRONICS CO., LTD.) 14 February 2019 (2019-02-14)<br>See paragraphs [0201]-[0282]; claim 1; and figures 18 and 20. | 1-12 |
| DA | 3GPP; TSG RAN; NR; Physical layer procedures for control (Release 17). 3GPP TS 38.213 V17.6.0. 26 June 2023.<br>See section 9.2.5. | 1-12 |
| A | US 2023-0098805 A1 (FG INNOVATION COMPANY LIMITED) 30 March 2023 (2023-03-30)<br>See paragraphs [0200]-[0217]. | 1-12 |
| A | US 2023-0284260 A1 (LENOVO (SINGAPORE) PTE. LTD.) 07 September 2023 (2023-09-07)<br>See paragraphs [0030]-[0032]. | 1-12 |
| A | US 2022-0330289 A1 (QUALCOMM INCORPORATED) 13 October 2022 (2022-10-13)<br>See paragraphs [0079]-[0104]; and figures 9-10 and 14. | 1-12 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **16 January 2025** | **20 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/014461**

| Patent document cited in search report | | | Publication date (day/month/year) | Patent family member(s) | | | Publication date (day/month/year) |
|---|---|---|---|---|---|---|---|
| US | 2019-0053089 | A1 | 14 February 2019 | KR | 10-2019-0017586 | A | 20 February 2019 |
| | | | | KR | 10-2436802 | B1 | 26 August 2022 |
| | | | | US | 11323902 | B2 | 03 May 2022 |
| | | | | WO | 2019-031940 | A1 | 14 February 2019 |
| US | 2023-0098805 | A1 | 30 March 2023 | US | 11595158 | B2 | 28 February 2023 |
| | | | | US | 11784759 | B2 | 10 October 2023 |
| | | | | US | 2021-0218504 | A1 | 15 July 2021 |
| US | 2023-0284260 | A1 | 07 September 2023 | BR | 112021019822 | A2 | 07 December 2021 |
| | | | | CN | 113661668 | A | 16 November 2021 |
| | | | | CN | 113661668 | B | 26 April 2024 |
| | | | | CN | 118199820 | A | 14 June 2024 |
| | | | | EP | 3949189 | A1 | 09 February 2022 |
| | | | | EP | 3949189 | B1 | 01 May 2024 |
| | | | | EP | 4358453 | A2 | 24 April 2024 |
| | | | | EP | 4358453 | A3 | 26 June 2024 |
| | | | | KR | 10-2021-0147025 | A | 06 December 2021 |
| | | | | US | 11212821 | B2 | 28 December 2021 |
| | | | | US | 11690095 | B2 | 27 June 2023 |
| | | | | US | 2020-0322971 | A1 | 08 October 2020 |
| | | | | US | 2022-0078814 | A1 | 10 March 2022 |
| | | | | WO | 2020-202000 | A1 | 08 October 2020 |
| US | 2022-0330289 | A1 | 13 October 2022 | BR | 112023019964 | A2 | 14 November 2023 |
| | | | | CN | 117136612 | A | 28 November 2023 |
| | | | | EP | 4320972 | A1 | 14 February 2024 |
| | | | | JP | 2024-514104 | A | 28 March 2024 |
| | | | | KR | 10-2023-0164682 | A | 04 December 2023 |
| | | | | TW | 202245506 | A | 16 November 2022 |
| | | | | US | 12058676 | B2 | 06 August 2024 |
| | | | | WO | 2022-216452 | A1 | 13 October 2022 |

Form PCT/ISA/210 (patent family annex) (July 2022)